# EUROPEAN PATENT APPLICATION

(11) **EP 1 480 448 A2**
(43) Date of publication of application: **24.11.2004**
(21) Application number: 04252939.6
(22) Date of filing: 18.05.2004
(51) Int. Cl.: H04N 5/14

(54) **Motion detection and analysis**

(30) Priority: 21.05.2003 GB 0311655
(71) Applicant: Renishaw plc, Wotton-Under-Edge Gloucestershire GL12 8JR (GB)
(72) Inventor: Chapman, Mark Adrian Vincent, Gloucestershire, GL12 7SB (GB); Loukianov, Sergey, Gloucestershire, GL5 1EE (GB)
(74) Representative: Jackson, John Timothy

(57) **Abstract**

In order to determine movements of two objects, two signals of different phase are obtained which depend on the movement, these signals are processed by locating successive values of constellation states of the two signals in a first co-ordinate axis system which comprises an axis radiating from an origin. A processor is arranged to monitor the change in said constellation states of the successive values by using at least a first and a second data samples which are obtained by sampling the two signals over time. A second co-ordinate axis system is provided comprising an axis radiating from an origin whereby the second co-ordinate axis system is rotatable and prior to sampling the second data sample the second co-ordinate axis system is rotated relative to the first data sample such that the angular position of the first data sample with respect to the second co-ordinate axis system is known.

## Description

The present invention relates to the detection and analysis of motion. It is particularly, but not exclusively, concerned with detection of motion measured by interferometer or encoder systems.

One way to detect movement is to use encoders based on the overlap of a scale with an array of sensors. The scale comprises a series of marks. As the marks move relative to the sensors, the relative displacement between the scale and the sensors can be measured on the basis of the output of the respective sensors.

In such systems, the simplest case is where there are two sensors which differ by 90° in phase, for example one producing a sine output whilst the other producing a cosine output. If these are presented on mutually orthogonal axes, the possible outputs can be considered as being within a detection circle centred on the origin of the co-ordinate axes - a Lissajous figure. At its simplest, that co-ordinate system may represent displacement.

A given point within the circle may be represented by two polar co-ordinates: angle and radius. The radius is a measure of the magnitude of the signal strength, and the angle is a measure of displacement. As the angular ordinate increases or decreases the displacement measured by the system increases or decreases. The displacement resolution of the system is limited by the precision to which the angular ordinate can be measured.

A known way of calculating displacement is by sampling the signals at periodic time intervals. In order to establish direction as well as distance, it is convenient to divide the circle into segments, for example 90° segments. In this way, a movement from one segment to an adjacent one indicates direction thus, the current position (angular segment) is compared with the previous position. There are four possible outcomes. If the segmental difference is zero, then the system assumes that the system has remained "stationary". If the difference is plus one then the system assumes that the displacement has positively increased, and if the difference is minus one then the system assumes that the displacement has negatively increased. Finally if the difference is either +2 or -2 then the system flags an over speed error since the system cannot decide whether the system has moved in the positive or negative direction. There are two possible reasons why the system flags a movement by two segments: either the system is moving at sufficient speed to generate a two segment displacement, in which case the system flags a genuine over speed error; or the signals being processed are noisy, in which case the system flags an over speed error inadvertently. These difficulties can be reduced by processing in smaller segments, but again there is always one segment which does not carry sufficient information about how it is reached; or, by increasing the sampling rate, but this is limited by the speed of associated processing electronics.

A development from having a displacement constraint on the system, is to have a velocity constraint, so that the change in velocity is no more than one increment between processed data samples. This is described in EP1103790. In earlier systems, having displacement constraint, the maximum velocity in a four quadrant system was ±1, since a jump of two segments would flag an over speed error. In EP1103790 this limitation is removed. In the simplest implementation, the change in velocity (i.e. acceleration) between successive samples is restricted to 0 and ±1 i.e. a valid movement is now limited (in a four segment system) not just to the adjacent segment but to the following segment.

In known arrangements involving two or more co-ordinate axis systems the minimum requirement is that each axis system defines three segments for example, a first co-ordinate axis system defines three axes disposed at 120° with the origin of the co-ordinate system at their intersection, thereby defining the three segments, and a second axis system again has three axes at 120° which are at 60° to the axes of the first system and preferably intersect at the same point. Regardless of whether it is displacement, velocity, or acceleration that constrains the system, the use of two axis systems enables the proportion of the circle in which a valid signal is obtained to be increased compared to a one axis system. Considering displacement, a satisfactory movement can only result in a change no greater than from one segment to an adjacent one. Movements through two segments are not permitted. However, as there are two co-ordinate systems, a measurement that has changed by two segments in one system, but only one in another, is of doubtful validity but may be accepted (depending on where within the segment the 'invalid' measurement lies). If it changes by two segments in both co-ordinate systems it is clearly invalid, and in this case the system would flag an over speed error.

The present invention provides an apparatus for determining movement, comprising:
means for generating two signals of different phase in dependence on the relative position of two objects, the movement of said two objects producing corresponding changes in said two signals;
a processor for processing said two signals, thereby to determine said movement whereby the means for processing is on the basis of locating successive values of constellation states of the two signals in a first co-ordinate axis system comprising an axis radiating from an origin, said processing means being arranged to monitor the change in said constellation states of the successive values by using at least a first and a second data samples which are obtained by sampling the two signals over time;
wherein a second co-ordinate axis system comprising an axis radiating from an origin is provided whereby the second co-ordinate axis system is rotatable and prior to sampling the second data sample the second co-ordinate axis system is rotated relative to the first data sample such that the angular position of the first data sample with respect to the second co-ordinate axis system is known.

By having a rotatable co-ordinate axis system, a movable angular region of uncertainty as to the direction of travel can be defined for each reading rather than using the technique of counting the number of segments that have been traversed between the sampling of signals. The angular size of this region can be related to the characteristics of the apparatus being used.

In a preferred embodiment, the second co-ordinate axis system is rotated such that the first signal is substantially aligned to the axis of the rotatable axis system.

In this case, the region of uncertainty and thus the zone in which an error would be flagged may be symmetrically aligned about a line defined as passing through the co-ordinates of the first signal and the origin i.e. a continuation of the axis on the other side of the origin to the first signal. This rotatable zone could be defined by two further axes which have a common origin with the axis of the second co-ordinate axis system. The angle subtended between the two further axes would depend on, amongst other things, the amount of noise tolerated by the apparatus.

Alternatively, when at least three segments have been defined in the second co-ordinate axis system, the system is rotated such that first signal is substantially central to one of the segments of that co-ordinate axis system.

In this alternate case, the region of uncertainty and thus the zone in which an error would be flagged may be symmetrically aligned about a region located diagonally opposite that where the signal were located in the circle. Where each co-ordinate axis system defines four segments, this region would be centrally located in the opposite segment.

In the present invention, the distance that can be moved in each direction prior to an error signal being obtained is therefore approximately equalised thus reducing the likelihood of an error signal and enabling an increase in the displacement that is allowed between signal samples being taken. This is because the region of uncertainty is aligned to the signal rather than being calculated based on stationary axis systems.

Additionally, problems due to noise are mitigated as, for the determination of direction, only the location of the next signal with respect to the rotatable axis system is of concern. The location with respect to the fixed axis system is irrelevant.

In a preferred embodiment, a prediction of the position of the next measurement is made on the basis of previous measurements. A processor may be used to derive a prediction of a successive value of the constellation of states based on earlier or previous values of constellation states. In this embodiment, the region of uncertainty or forbidden zone is determined by the predicted position of the next measurement. Thus, the processor extrapolates, from earlier values, the likely signal position when the next sample will be taken and the rotatable axis system is rotated so that its alignment with the predicted position is known. If the measurement occurs in the forbidden zone then a error results. If the measurement does not occur in the forbidden zone then it is a valid measurement and the rotatable axis system is rotated so that alignment is known with respect to the next predicted position. The prediction embodiment is particularly useful when applied to apparatus having a constraint which is a higher order derivative than change in displacement.

In a second aspect of the invention there is described a method of determining movement, comprising generating at least two signals of different phase in dependence on the relative position of two objects whereby movement of the two objects causes corresponding changes in the at least two signals; sampling the at least two signals to obtain a data sample; processing the data sample, on the basis of locating the constellation states of the at least two signals in a first relatively fixed co-ordinate axis system which comprises an axis radiating from an origin, rotating a second rotatable co-ordinate axis system with respect to the first co-ordinate axis system and the data sample such that the angular position of the data sample with respect to the second rotatable co-ordinate axis system is known wherein the second rotatable co-ordinate axis system comprises an axis radiating from an origin; and sampling the at least two signals to obtain a further data sample.

Preferably, the second rotatable co-ordinate axis system defines a movable angular region of uncertainty whereby, if the further data sample lies within this region, an error is flagged.

Embodiments of the invention will now be described in detail, by way of the example, with reference to the accompanying drawings, in which:

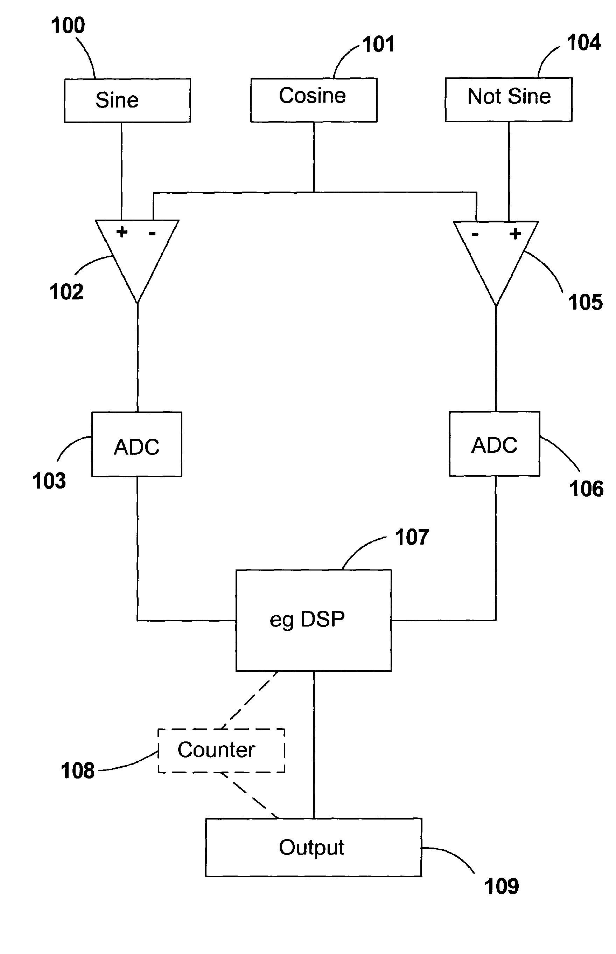

Fig 1 shows an apparatus for processing signals from a detector of, for example, an interferometer or encoder system;
Fig 2 is a schematic diagram illustrating the analysis of measurement points using a two axis system each system having one axis with displacement as the constraint;
Fig 3 is a schematic diagram illustrating the analysis of measurement points using a two axis system when the rotatable axis system has three axes;
Fig 4 is a schematic diagram illustrating the analysis of measurement points using a two axis system each system having four segments with displacement as the constraint; and
Fig 5 is a schematic diagram illustrating the predictive embodiment of the invention using a two axis system each having four segments with displacement as the constraint.

As has previously been mentioned, two sensors produce sine and cosine signals 100, 101 which are fed via a differential amplifier 102 to an analogue to digital converter 103. As an example, signals from encoder and interferometer systems may have a DC bias, and therefore a signal 104 corresponding to the inverse of the sine signal (not sine) is also subtracted from the cosine signal 101 via a second differential amplifier 105. The output is then fed to a second analogue to digital converter 106, and the outputs of both analogue to digital converters 103, 106 are fed to a processor 107, such as a digital signal processor (DSP). If it could be shown that the sine and cosine signals 100, 101 were free of a DC component within acceptable tolerances, then these signals could be fed to amplifiers 102 and 105 respectively with out the need for signal subtraction. The processor 107 then carries out the analysis of the signals it receives. The single axes system is described first followed by the two axes system.

The processor 107 may include an accumulator, counter, or a separate counter 108 may be provided prior reaching to a suitable output device 109 such as a display unit or servo controller. If a servo controller is used, no separate counter is required as such a controller may have the quadrature signals themselves at inputs. It should be noted that the device thus described may be modified e.g. by use of a single analogue to digital converter which switches between the outputs of the amplifiers 102 and 105.

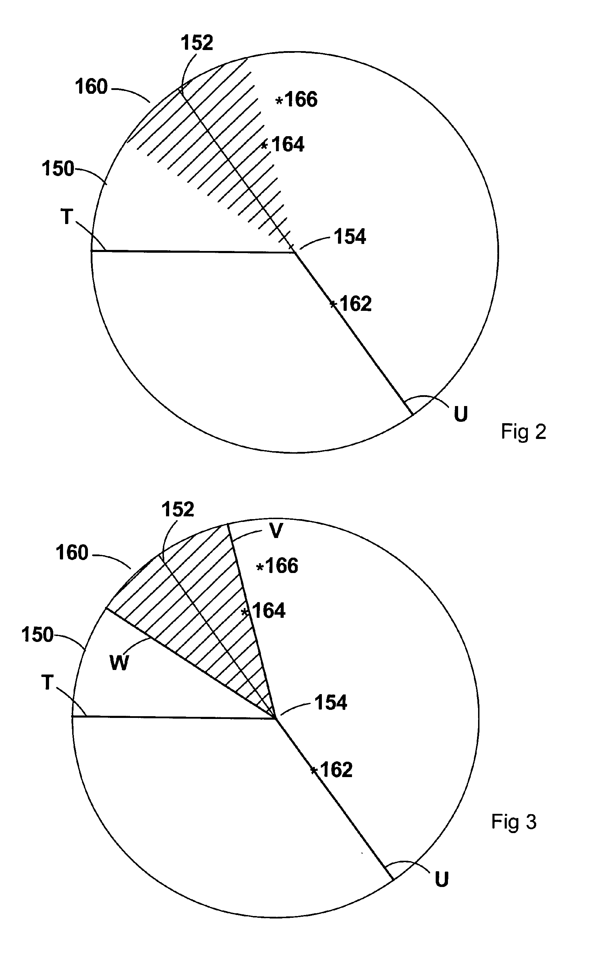

Fig 2 shows the outputs of two sensors producing sine and cosine outputs, measured against a two axis system. The outputs are represented by a circle 150. There is a first stationary axis system having an axis T and a second rotatable axis system having an axis U. A forbidden zone 160 is located in a region of the circle 150 which is centred on a line 152 that is the continuation of the axis U through the origin 154 of the circle.

When a first reading 162 is taken, the rotatable axis U is moved to align the first point 162 to the rotatable axis U (as shown in the Fig). The forbidden zone 160 is of sufficient angular width to prevent any valid readings being taken when there is uncertainty about the direction travelled. For example a second reading at 164 would not be a valid reading as it may be unknown (for example when the stationary axis T is located within the forbidden zone) whether we travelled in a clockwise or anti-clockwise direction to reach the point. A second reading at 166 is however valid as it could only have occurred by travelling in an anti-clockwise direction. This is because the size of the region of uncertainty (the forbidden zone) is determined by the noise of the system in addition to a safety region.

The axis T of the stationary system merely defines a count up or a count down in the relative distance moved by the two objects, depending on the direction, when the signal passes through the axis.

In Fig 3, the forbidden zone is defined by two further axes V and W which are arranged having a common origin with each other and axis U and are at least temporarily fixed in position with respect to U and each other. In this embodiment, the readings must always be aligned with axis U for two reasons, the angular separation between V and W defines the forbidden zone and is not necessarily equal to the angular separation UV and UW (which may also not be equal to each other), and secondly, because there is only one reference point on the stationary axis system (axis T).

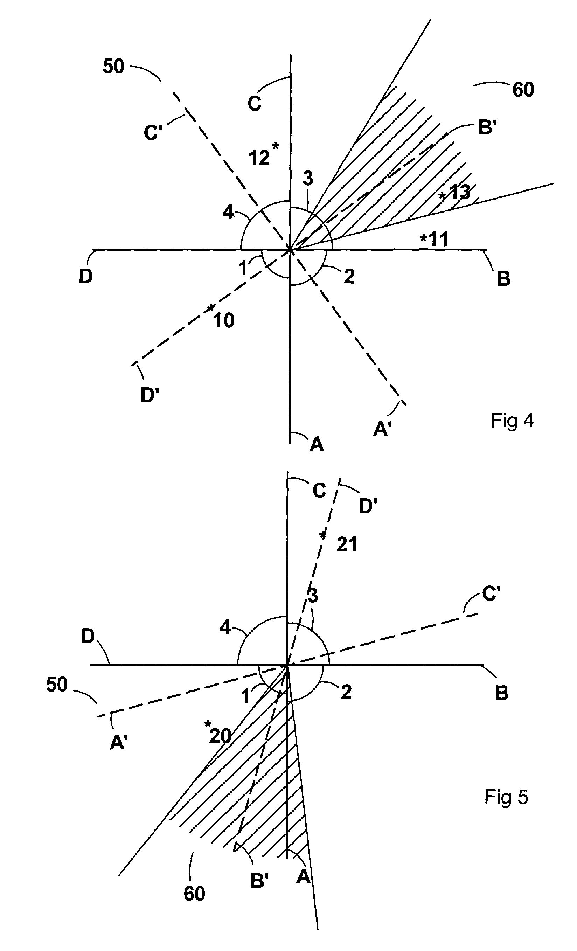

Referring now to Fig 4 which shows the outputs of two sensors producing sine and cosine outputs, measured against a two axis system. Fig 4 shows a first axis system defined by axes A, B, C and D which are successively spaced at 90° about a common centre. These axes define 4 segments which are labelled 1 to 4. A second rotatable axis system 50 also has four axes - A', B', C' and D' which are successively spaced at 90° about the same common centre as the first axis system and defines four segments A'B', B'C', C'D', D' A' .

The constraint for this system is displacement. The first measured value is at point 10 and the system is considered as stationary at this starting point. The rotatable axis system 50 has been rotated so that point 10 is aligned with axis D'. In order to be confident in the next measured reading, it may occur at any point around the circle except zone 60 (shaded). In this narrow zone 60, there is uncertainty as to which direction (clockwise or anticlockwise) was travelled. Thus, a reading at points 11 and 12 are acceptable, but not at point 13 as there is uncertainty in how the system arrived there.

The invention thus allows, even when displacement is the constraint, movement through two segments (1 to 3 for reading 11) of the stationary axis system as long as the defined region or zone of uncertainty is not entered. This is because only the second rotatable set of axes determines whether the reading is acceptable or not. The first co-ordinate axis system counts up or down as motion occurs and provides the position of the data sample from the angular position of the reading.

When it has been determined that the next reading (point 11) is not within the region of uncertainty, the rotatable axes 50 are rotated such that one axis, for example B', is aligned to that measurement. The forbidden zone is now a symmetrical zone about axis D'.

As there are four axes A,B,C,D in the stationary axis system, there are four count positions per revolution so it is less critical in this example to have the same rotatable axis system aligned with the readings. Of course if the rotatable axis system of Fig 3 were used in this example i.e. a three axis system, then as the size of the forbidden zone is determined by two of the axes, the same axis (U) would need to be aligned each time.

When an uneven number of axes are used in a system and/or when the segment sizes are of differing sizes, the centre of the region of uncertainty will be found located around a continuation of the line drawn from the measured position through the origin. The forbidden zone need not be symmetrical and can be varied in size depending on current working conditions.

In Fig 5, the same four segment system is used however in this case the predictive embodiment is described. In order to enable fast relative motion between two moving parts, it is desirable to predict where the next measurement will occur i.e. what the signal outputs will be as this allows a comparison to be made between the actual and predicted rather than requiring time to process the difference between the successive positions to determine allowability i.e. whether an error has occurred.

For prediction, at least two previous measurements are necessary to predict the next reading. In this case, as a displacement is the constraint, two previous measurements are required. If reading two is at 20 and the processor predicts based on readings one and two that at the next measurement the position will occur at point 21 and the direction of travel is known (from the previous readings) to be anti-clockwise, then under known systems, this would not be allowed (as the difference is -2). However, when predictions are made using a rotatable set of axes, the situation changes. In this case, the forbidden zone 60 is associated with the predicted location 21 not the current location 20. As long as the next measured value does not lie within forbidden zone 60 which is located about axis B' as this axis is found 180° round the circle from D' which is where the prediction 21 is located, the measured value will be accepted as a valid reading. If, however, the measured value lies within the forbidden zone 60, then a change in velocity either positive or negative that is not allowed has occurred. This is because the predicted value is based on the recent trend in velocity of the relative motion of the system. Thus the forbidden zone defines the region in which either the motion has slowed down too quickly or has speeded up at too fast a rate to be allowed.

To predict the location of the next reading, it is initially assumed that velocity is constant then the difference between the previous two phase angle positions (a value for the velocity) is added to the last reading to provide a predicted location for the next reading. Due to noise and fact that the velocity may vary to some degree without affecting the validity of the next reading, the predicted location may lie within an range of phase angles without the next reading being invalid. The remaining phase angles are situated within the forbidden zone.

The prediction can be offset from the calculated location by an angle θ in order to take into account external factors such as friction within the system otherwise, over time, the location of the next reading may drift towards the forbidden zone.

If the constraint on the system were velocity, then the same principle applies for predicting the next location except that when the calculation is made, it is assumed that acceleration is constant for the time intervals between the two previous readings and the next reading is made. Likewise for situations in which acceleration is the constraint, it is jerk that is assumed constant. For this situation three prior readings are required. Thus, the prediction is derived on the basis of a predetermined constraint on permitted variations in the successive values.

For systems where displacement and velocity are the constraint, three (or more) previous readings may be used in this case, the velocity or acceleration value is an average of two (or more) previous sampling intervals.

The problem of noise, which was mitigated by the invention disclosed in EP1103790 is, with the application of the present invention, further reduced. This is because the location of the last measurement compared to the current measurement is no longer constrained by the use of fixed axes. The use of one set of fixed axes to determine absolute position and thus provide the counting feature and one set of rotatable axes to provide the limits and thus define where a valid reading occurs means that as well as the zone of uncertainty being narrowed the possibility of a wrongly determined error is also reduced.

In all the examples described, the two co-ordinate axis systems have shared a common origin. This is convenient as it ensures overlap between the two systems throughout the angular range of the systems, but is not essential.

## Claims

1. An apparatus for determining movement, comprising:
means for generating two signals of different phase in dependence on the relative position of two objects, the movement of said two objects producing corresponding changes in said two signals;
a processor for processing said two signals, thereby to determine said movement whereby the means for processing is on the basis of locating successive values of constellation states of the two signals in a first co-ordinate axis system comprising an axis radiating from an origin, said processing means being arranged to monitor the change in said constellation states of the successive values by using at least a first and a second data samples which are obtained by sampling the two signals over time;
wherein a second co-ordinate axis system comprising an axis radiating from an origin is provided whereby the second co-ordinate axis system is rotatable and prior to sampling the second data sample the second co-ordinate axis system is rotated relative to the first data sample such that the angular position of the first data sample with respect to the second co-ordinate axis system is known.

2. An apparatus according to claim 1 wherein the second co-ordinate axis system is rotated such that the first data sample is substantially aligned to the axis of the rotatable axis system.

3. An apparatus according to claim 1 or claim 2 wherein the second co-ordinate axis system comprises two further axes which define the forbidden zone.

4. An apparatus according to any preceding claim wherein the change in the constellation states that is monitored is one of change in displacement, velocity or acceleration.

5. An apparatus according to any preceding claim wherein the processor is used to derive a prediction of a successive value of the constellation of states based on earlier or previous values of the constellation states.

6. An apparatus according to any preceding claim wherein the processor is arranged to derive a prediction of a successive value of the constellation of states from at least two previous values of the constellation states.

7. An apparatus according to claim 5 or 6 wherein the prediction is derived on the basis of a predetermined constraint on permitted variations in the successive values.

8. An apparatus according to claim 7 wherein the predetermined constraint is velocity, acceleration or a higher order derivative.

9. A method of determining movement, comprising
generating at least two signals of different phase in dependence on the relative position of two objects whereby movement of the two objects causes corresponding changes in the at least two signals;
sampling the at least two signals to obtain a data sample;
processing the data sample, on the basis of locating the constellation states of the at least two signals in a first relatively fixed co-ordinate axis system which comprises an axis radiating from an origin,
rotating a second rotatable co-ordinate axis system with respect to the first co-ordinate axis system and the processed data sample such that the angular position of the data sample with respect to the second rotatable co-ordinate axis system is known wherein the second rotatable co-ordinate axis system comprises an axis radiating from an origin; and
sampling the at least two signals to obtain a further data sample.

10. A method according to claim 9 wherein the second rotatable co-ordinate axis system defines a movable angular region of uncertainty whereby, if the further data sample lies within this region, an error is flagged.
